# FASCICULE DE BREVET EUROPEEN

(11) **EP 1 184 261 B1**
(45) Date de publication et mention de la délivrance du brevet: **24.01.2007**
(21) Numéro de dépôt: 01402169.5
(22) Date de dépôt: 14.08.2001
(51) Int. Cl.: B62D 21/15, B62D 21/11

(54) **Ensemble de structure de caisse comportant des longerons inférieurs renforcés**
Aufbaustruktur mit verstärktem, unterem Längsträger
Body structure with reinforced lower beams

(30) Priorité: 29.08.2000 FR 0011042
(43) Date de publication de la demande: 06.03.2002
(73) Titulaire: Renault s.a.s., 92100 Boulogne Billancourt (FR)
(72) Inventeur: Yvetot, Marc, 75015 Paris (FR)

(56) Documents cités:
- EP-A- 0 311 466
- EP-A- 0 679 564
- DE-A- 19 703 951
- DE-A- 19 934 666
- US-A- 5 393 095
- PATENT ABSTRACTS OF JAPAN vol. 017, no. 130 (M-1382), 18 mars 1993 (1993-03-18) & JP 04 310477 A (NISSAN MOTOR CO LTD), 2 novembre 1992 (1992-11-02)

## Description

L'invention concerne un ensemble de structure de caisse de véhicule automobile.

L'invention concerne plus particulièrement un ensemble de structure de caisse de véhicule automobile, du type qui comporte une partie avant qui forme notamment support pour des organes du véhicule, et une partie arrière rigide formant notamment habitacle du véhicule automobile, du type qui comporte un premier élément, tubulaire et compressible longitudinalement lors d'un choc, qui comporte au moins une zone de fixation à au moins une des parties.

On connaît de nombreux exemples d'ensembles de structure de caisse de ce type.

Il s'agit par exemple d'ensembles de structure de caisse pour lesquels, par exemple et de manière non limitative de l'invention, la partie avant comporte, dans un premier plan horizontal supérieur, au moins deux longerons longitudinaux supérieurs qui s'étendent vers l'avant à partir de la partie arrière et, dans un second plan horizontal inférieur, deux longerons longitudinaux inférieurs formant des premiers éléments, qui s'étendent parallèlement en dessous des longerons supérieurs, dont des extrémités avant sont fixées rigidement à des jambes de suspension fixées à des extrémités avant des longerons supérieurs, dont des parties intermédiaires sont liées chacune au longeron supérieur associé par au moins un tirant, et dont des extrémités arrière sont agencées avec jeu en regard d'éléments de réception qui sont portés par exemple par un berceau moteur solidaire de la partie arrière pour dévier, en cas de choc longitudinal, les efforts de déformation des longerons supérieurs.

De tels ensembles montés sur un premier véhicule, permettent, en cas de choc longitudinal avec un deuxième véhicule venant en sens inverse, d'accrocher des organes mécaniques du deuxième véhicule à l'aide des longerons inférieurs pour éviter que, au moment du choc, le premier véhicule ne chevauche le deuxième véhicule ou ne pénètre le deuxième véhicule. Les longerons inférieurs, dont des extrémités avant sont liées aux jambes de suspension liées rigidement aux longerons supérieurs et dont les extrémités arrière sont enfilées avec jeu sur des éléments de réception du berceau moteur, permettent par ailleurs de décharger les longerons supérieurs des efforts de déformation résultant du choc en les dirigeant vers le berceau moteur, créant ainsi une voie de passage d'efforts vers celui-ci.

Lors d'un choc longitudinal, le jeu qui sépare les extrémités arrière des longerons inférieurs des éléments de réception du berceau moteur est absorbé du fait du chargement en effort des jambes de suspension et des longerons inférieurs.

De ce fait, les extrémités arrière des longerons inférieurs sont soumises à un effort de compression longitudinal d'intensité très élevée.

Il importe donc d'éviter que les longerons inférieurs ne puissent se plier par flambage, ce qui compromettrait leur capacité à absorber l'énergie résultant du choc, notamment si leur déformation conduisait les longerons inférieurs à quitter les éléments de réception du berceau moteur.

Par ailleurs, le document JP-04310777 décrit et représente un longeron tubulaire qui comporte des portions d'amorce de rupture qui sont susceptibles de se déformer en cas de choc. Le longeron exposé est doublé extérieurement par un élément de renfort agencé à l'extérieur du longeron, ce qui présente l'inconvénient d'encombrer le compartiment moteur et de multiplier le nombre de références. Ce document Japonais couvre toutes les caractéristiques du préambule de la revendication 1.

Pour éviter ce risque, l'invention propose un ensemble de structure de caisse du type décrit précédemment, comportant des longerons inférieurs comportant une partie avant compressible longitudinalement et une partie arrière présentant une rigidité accrue.

Plus généralement l'invention trouve à s'appliquer à tout premier élément, compressible en cas de choc, destiné à être fixé à une partie d'un véhicule et comportant une partie de rigidité élevée.

Dans ce but, l'invention propose un ensemble de structure de caisse du type décrit précédemment, caractérisé en ce que le premier élément comporte, sur au moins une partie de sa longueur, au moins un tube complémentaire intérieur de doublure destiné à le rigidifier partiellement.

Selon d'autres caractéristiques de l'invention :
- le premier élément est fixé rigidement à la partie avant et en ce que chaque tube complémentaire intérieur est agencé à l'extrémité arrière du premier élément qu'il double, de manière à le renforcer dans l'éventualité d'un contact avec un deuxième élément porté par la partie arrière rigide,
- le tube complémentaire intérieur de doublure est emmanché à force à l'intérieur du premier élément,
- des parois intérieures du premier élément tubulaire comportent des nervures en saillie destinées à assurer la rétention du tube complémentaire intérieur de doublure associé,
- le tube complémentaire intérieur de doublure est creux et comporte intérieurement au moins une entretoise de rigidification qui s'étend transversalement entre les parois intérieures du tube complémentaire,
- l'entretoise comporte un évidement qui est agencé en regard de perçages coaxiaux du premier élément et du tube complémentaire et qui est destiné à permettre le passage d'une vis de fixation d'axe transversal qui traverse lesdits perçages pour permettre la fixation d'un troisième élément sur le premier élément,
- l'évidement est constitué d'un alésage taraudé de réception de la vis,
- le premier élément et le tube complémentaire intérieur de doublure sont réalisés sous la forme de tronçons de profilés en aluminium,
- la partie avant comporte, dans un premier plan horizontal supérieur, au moins deux longerons longitudinaux supérieurs qui s'étendent vers l'avant à partir de la partie arrière et, dans un second plan horizontal inférieur, deux longerons longitudinaux inférieurs formant des premiers éléments, qui s'étendent parallèlement en dessous des longerons supérieurs, dont de extrémités avant sont fixées rigidement à des jambes de suspension fixées à des extrémités avant des longerons supérieurs, dont des parties intermédiaires sont liées chacune au longeron supérieur associé par au moins un tirant formant le troisième élément, et dont des extrémités arrière sont agencées avec jeu en regard d'éléments de réception qui sont portés par la partie arrière et qui forment les deuxième éléments pour dévier, en cas de choc longitudinal, les efforts de déformation des longerons supérieurs.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un élément de structure de caisse selon l'invention,
- la figure 2a est une vue de détail en perspective d'un longeron inférieur selon l'invention,
- la figure 2b est une vue de détail en perspective de l'entretoise, et
- la figure 3 est une vue en coupe transversale d'un longeron inférieur selon l'invention.

Dans la description qui va suivre, des chiffres de référence identiques désignent des pièces identiques ou ayant des fonctions similaires.

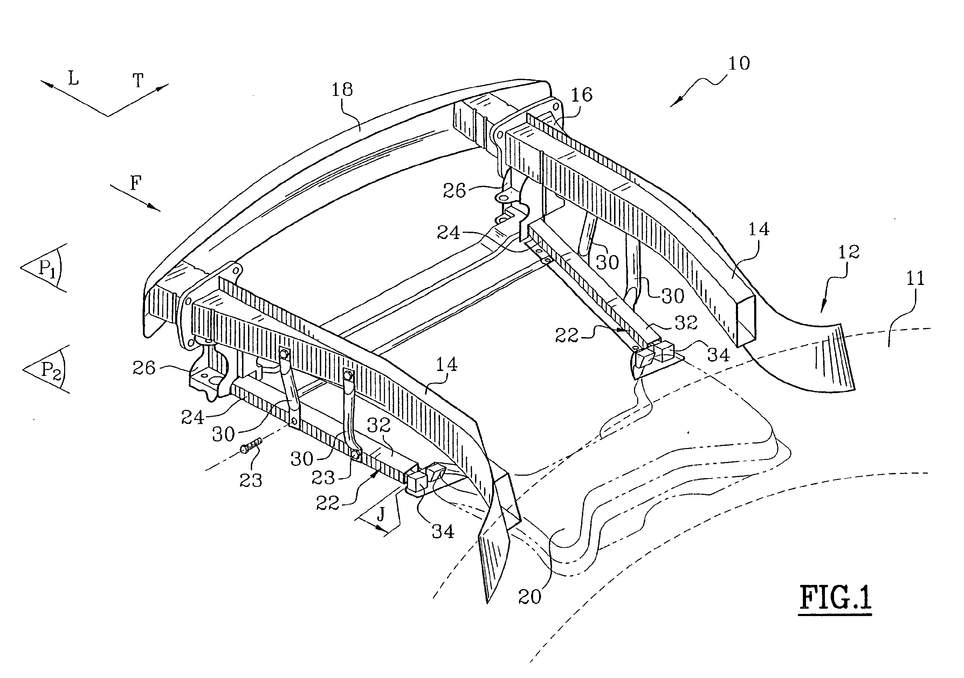

Comme l'illustre la figure 1, de manière connue, un ensemble de structure de caisse est formé d'une partie arrière rigide 11 formant habitacle du véhicule automobile, en avant de laquelle s'étend une partie avant 10 de direction sensiblement longitudinale "L". La partie avant 10 est par exemple soudée au point sur la partie arrière 11 au niveau de son extrémité arrière 12, qui est représentée à droite de la figure 1.

La partie avant 10 de structure de caisse comporte, dans un premier plan "P₁" horizontal supérieur, au moins deux longerons 14 longitudinaux supérieurs qui s'étendent vers l'avant à partir de la partie arrière 11 formant habitacle. Les extrémités avant 16 des longerons 14 sont réunies par une poutre transversale 18, qui peut notamment servir de support pour un bouclier et/ou une façade avant (non représentés) du véhicule. Les longerons 14 sont compressibles en cas de choc de manière à dissiper l'énergie cinétique résultant du choc.

Dans un second plan "P₂" horizontal inférieur, la partie avant 10 de structure de caisse comporte un berceau moteur inférieur 20 qui s'étend vers l'avant à partir de la partie arrière 11 à laquelle il est fixé. Dans ce même plan "P₂", la partie avant 10 comporte deux premiers éléments longitudinaux 22, notamment deux longerons 22 longitudinaux inférieurs qui s'étendent en dessous et parallèlement aux longerons supérieurs 14. Les longerons inférieurs 22 sont également compressibles en cas de choc de manière à dissiper l'énergie cinétique résultant du choc.

Les longerons inférieurs 22 sont fixés au niveau de leurs extrémités avant 24 à des jambes de suspension 26 qui sont fixées aux extrémités avant 16 des longerons supérieurs 14. Les extrémités arrière 32 des longerons inférieurs 22 sont agencées avec un jeu "J" en regard de deuxièmes éléments 34 de l'ensemble de structure de caisse, notamment des éléments 34 de réception du berceau moteur 20, pour dévier des longerons supérieurs 14 les efforts "F" de déformation résultant d'un choc longitudinal. Par ailleurs, les parties intermédiaires 28 des longerons inférieurs 22 sont liées chacune au longeron supérieur associé 14 par au moins un troisième élément, notamment un tirant 30.

L'inconvénient des longerons inférieurs 22 conventionnels est que, en cas de choc, les extrémités arrière 32 des longerons inférieurs sont soumises à un effort de compression longitudinal d'intensité très élevée.

En effet, lorsque l'effort "F" de déformation longitudinal, ayant provoqué l'écrasement partiel des longerons supérieurs 14, est transmis aux longerons inférieurs 22, ceux-ci sont sollicités en compression sur toute leur longueur entre leurs extrémités avant 24, liées aux jambes de suspension 26, et leurs extrémités arrière 32 qui sont reçues par les éléments 34 de réception du berceau moteur 20 après avoir rattrapé le jeu "J".

Il importe donc d'éviter que les longerons inférieurs 22 ne puissent se plier par flambage, ce qui compromettrait leur capacité à absorber l'énergie résultant du choc, notamment si leur déformation conduisait les longerons inférieurs 22 à quitter les éléments de réception 34 du berceau moteur 20.

Conformément à l'invention, chaque longeron inférieur 22 formant le premier élément comporte, sur au moins une partie de sa longueur, au moins un tube complémentaire intérieur de doublure 36 destiné à le rigidifier partiellement.

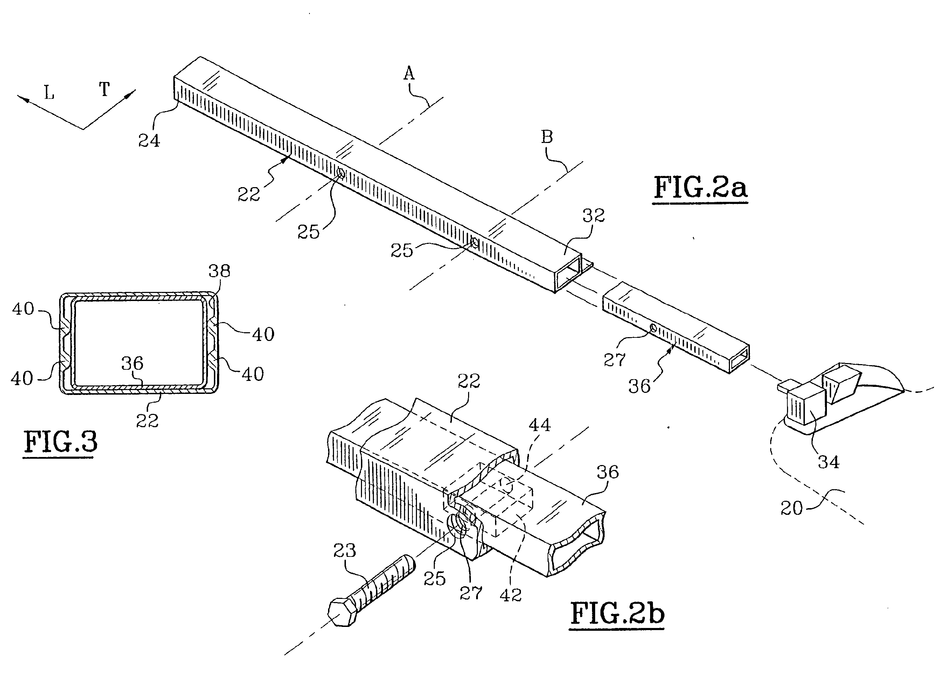

Cette configuration est représentée aux la figure 2a et 2b.

Dans le mode de réalisation préféré de l'invention, et de façon non limitative de celle-ci, les longerons inférieurs 22 et les tubes complémentaires intérieurs 36 de doublure sont réalisés sous la forme de profilés en aluminium et présentent notamment une section rectangulaire dans le plan transversal de direction "T".

Chaque tube 36 complémentaire intérieur est agencé à l'extrémité arrière 32 du longeron inférieur 22 qu'il double, de manière à le renforcer dans l'éventualité d'un contact avec l'élément associé 34 de réception du berceau moteur 20, dont une partie a été représentée à la figure 2a.

Dans le mode de réalisation préféré de l'invention, au moins un tube 36 complémentaire intérieur de doublure est emmanché à force à l'intérieur du longeron inférieur 22 associé.

A cet effet, comme l'illustre la figure 3, des parois intérieures 38 de chaque longeron inférieur 22 tubulaire comportent des nervures 40 en saillie qui sont destinées à assurer la rétention du tube complémentaire intérieur 36 de doublure à l'intérieur du longeron inférieur 22 associé. Les nervures 40 sont, à titre d'exemple et de façon non limitative de l'invention, réalisés par découpe ou poinçonnage des parois 38, ou bien sont issus du processus de formation par filière des longerons 22.

Lors de l'emmanchement du tube complémentaire intérieur 36 de doublure à l'intérieur du longeron inférieur 22, les nervures 40 pénètrent le matériau du tube complémentaire intérieur 36 de doublure de façon à l'immobiliser.

Cette disposition n'est pas limitative de l'invention, et le tube 36 complémentaire intérieur de doublure pourrait être soudé ou encore immobilisé par un moyen mécanique de fixation à l'intérieur du longeron inférieur 22 associé.

Dans le mode de réalisation préféré de l'invention, comme l'illustre la figure 2b, chaque tube complémentaire intérieur 36 de doublure est creux et comporte intérieurement au moins une entretoise 42 transversale de rigidification qui est montée entre les parois intérieures transversales du tube 36. Cette entretoise permet avantageusement, dans la zone d'extrémité arrière 32 du longeron inférieur 22, qui est la zone plus sollicitée, d'éviter tout phénomène de flambage du profilé lorsque le longeron inférieur 22, en se déformant par compression, rattrape le jeu J qui le sépare de l'élément de réception 34.

Comme il a été illustré à la figure 1, les tirants 30 formant les troisièmes éléments sont fixés sur les longerons inférieurs 22 par des vis 23 d'axes transversaux A et B, et de ce fait chaque longeron inférieur 22 comporte des perçages associés 25 pour le passage des vis 23, comme représenté aux figure 2a et 2b. Lorsqu'au moins un des perçages 25 est agencé à proximité de la zone d'extrémité arrière 32 du longeron inférieur 22 qui comporte le tube 36 complémentaire intérieur de doublure, l'entretoise 42 est agencée préférentiellement au voisinage de la vis 23.

Plus particulièrement, l'entretoise 42 comporte un évidement 44 qui est agencé en regard des perçages coaxiaux 25 du premier élément 22 et 27 du tube complémentaire 36 et qui est destiné à permettre le passage d'une vis 23 de fixation d'axe B transversal qui traverse lesdits perçages 25, 27 pour permettre la fixation du tirant 30 formant le troisième élément sur le longeron inférieur 22.

Avantageusement, l'évidement 44 est par exemple constitué d'un alésage taraudé de réception de la vis 23.

Ceci permet avantageusement d'améliorer la rigidité du longeron inférieur 22 sur une longueur élevée tout en permettant l'implantation d'un point de fixation des tirants 30 à proximité de l'extrémité arrière 32 du longeron inférieur 22.

De la sorte le longeron inférieur 22 présente une rigidité continue sur toute la longueur de tube 36 complémentaire intérieur de doublure.

L'invention permet avantageusement de bénéficier d'un ensemble de structure de caisse qui est à même de transmettre des effort importants au berceau moteur 20 du véhicule.

L'invention peut avantageusement trouver à s'appliquer à tout premier élément 22 travaillant en compression.

## Revendications

1. Ensemble de structure de caisse de véhicule automobile, du type qui comporte une partie avant (10) qui forme notamment support pour des organes du véhicule, et une partie arrière rigide (11) formant notamment habitacle du véhicule automobile, du type qui comporte un premier élément (22), tubulaire et compressible longitudinalement lors d'un choc, qui comporte au moins une zone de fixation à au moins une des parties,
**caractérisé en ce que** le premier élément (22) comporte, sur au moins une partie de sa longueur, au moins un tube (36) complémentaire intérieur de doublure destiné à le rigidifier partiellement.

2. Ensemble selon la revendication précédente, **caractérisé en ce que** le premier élément est fixé rigidement à la partie avant et **en ce que** chaque tube complémentaire (36) intérieur est agencé à l'extrémité arrière (32) du premier élément (22) qu'il double, de manière à le renforcer dans l'éventualité d'un contact avec un deuxième élément (34) porté par la partie arrière (11) rigide.

3. Ensemble selon l'une quelconque des revendications précédentes, **caractérisé en ce que** le tube (36) complémentaire intérieur de doublure est emmanché à force à l'intérieur du premier élément (22).

4. Ensemble selon la revendication précédente, **caractérisé en ce que** des parois intérieures (38) du premier élément tubulaire (22) comportent des nervures (40) en saillie destinées à assurer la rétention du tube complémentaire (36) intérieur de doublure associé.

5. Ensemble selon l'une quelconque des revendications précédentes, **caractérisé en ce que** le tube complémentaire (36) intérieur de doublure est creux et comporte intérieurement au moins une entretoise (42) de rigidification qui s'étend transversalement entre les parois intérieures du tube complémentaire (36).

6. Ensemble selon la revendication précédente, **caractérisé en ce que** l'entretoise (42) comporte un évidement (44) qui est agencé en regard de perçages (25, 27) coaxiaux du premier élément (22) et du tube complémentaire (36) et qui est destiné à permettre le passage d'une vis (23) de fixation d'axe (B) transversal qui traverse lesdits perçages (25, 27) pour permettre la fixation d'un troisième élément (30) sur le premier élément (22).

7. Ensemble selon la revendication précédente, **caractérisé en ce que** l'évidement (44) est constitué d'un alésage taraudé de réception de la vis (23).

8. Ensemble selon l'une quelconque des revendications précédentes, **caractérisé en ce que** le premier élément (22) et le tube complémentaire (36) intérieur de doublure sont réalisés sous la forme de tronçons de profilés en aluminium.

9. Ensemble de structure de caisse de véhicule automobile selon l'une des revendications précédentes, **caractérisé en ce que** la partie avant (10) comporte, dans un premier plan horizontal (P₁) supérieur, au moins deux longerons longitudinaux supérieurs (14) qui s'étendent vers l'avant à partir de la partie arrière (11) et, dans un second plan horizontal (P₂) inférieur, deux longerons longitudinaux inférieurs formant des premiers éléments (22), qui s'étendent parallèlement en dessous des longerons (14) supérieurs, dont des extrémités avant (24) sont fixées rigidement à des jambes (26) de suspension fixées à des extrémités (16) avant des longerons supérieurs, dont des parties (28) intermédiaires sont liées chacune au longeron supérieur (14) associé par au moins un tirant (30) formant le troisième élément, et dont des extrémités arrière (32) sont agencées avec jeu en regard d'éléments de réception (34) qui sont portés par la partie arrière et qui forment les deuxième éléments pour dévier, en cas de choc longitudinal, les efforts de déformation des longerons supérieurs (14).

## Claims

1. Motor vehicle body structure assembly, of the type which comprises a front section (10) which particularly forms a support for components of the vehicle, and a rigid rear section (11) particularly forming a passenger compartment of the motor vehicle, of the type which comprises a first, tubular element (22) which can be compressed longitudinally during an impact, which comprises at least one region for fastening to at least one of the sections, **characterized in that** the first element (22) comprises, over at least part of its length, at least one complementary inner liner tube (36) intended to stiffen it partially.

2. Assembly according to the preceding claim, **characterized in that** the first element is fastened rigidly to the front section and **in that** each complementary inner tube (36) is arranged at the rear end (32) of the first element (22) that it lines, so as to stiffen it in the eventuality of contact with a second element (34) borne by the rigid rear section (11).

3. Assembly according to either one of the preceding claims, **characterized in that** the complementary inner liner tube (36) is force-fitted inside the first element (22).

4. Assembly according to the preceding claim, **characterized in that** inner walls (38) of the first, tubular element (22) comprise projecting ribs (40) intended to retain the associated complementary inner liner tube (36).

5. Assembly according to any one of the preceding claims, **characterized in that** the complementary inner liner tube (36) is hollow and internally comprises at least one stiffening brace (42) which extends transversely between the inner walls of the complementary tube (36).

6. Assembly according to the preceding claim, **characterized in that** the brace (42) has an opening (44) which is arranged in line with coaxial holes (25, 27) in the first element (22) and in the complementary tube (36) and which is intended to allow the passage of a fastening bolt (23) of transverse axis (B) which passes through the said holes (25, 27) in order to allow a third element (30) to be fastened to the first element (22).

7. Assembly according to the preceding claim, **characterized in that** the opening (44) is formed by a tapped bore for receiving the bolts (23).

8. Assembly according to any one of the preceding claims, **characterized in that** the first element (22) and the complementary inner liner tube (36) are produced in the form of profiled aluminium sections.

9. Motor vehicle body structure assembly according to one of the preceding claims, **characterized in that** the front section (10) comprises, in a first, upper horizontal plane (P₁), at least two upper longitudinal beams (14), which extend in the forward direction from the rear section (11) and, in a second, lower horizontal plane (P₂), two lower longitudinal beams forming first elements (22) which extend parallel below the upper beams (14) of which the front ends (24) are fastened rigidly to suspension struts (26) fastened to front ends (16) of the upper beams, of which intermediate portions (28) are each connected to the associated upper beam (14) by at least one tie rod (30) forming the third element, and of which rear ends (32) are arranged with clearance in line with reception elements (34) which are borne by the rear section and which form the second elements in order, in the event of longitudinal impact, to deflect the deformation forces of the upper beams (14).

## Patentansprüche

1. Aufbaustruktur für ein Kraftfahrzeug, der Art, die einen Vorderteil (10), der inbesondere einen Träger für die Fahrzeugelemente bildet, und einen starren Hinterteil (11) umfasst, der insbesondere den Innenraum des Kraftfahrzeugs bildet, der Art, die ein erstes Element (22) umfasst, das rohrförmig ist und im Falle eines Aufpralls in der Längsrichtung zusammengedrückt werden kann, welches mindestens einen Fixierbereich und einen der Teile umfasst,
**dadurch gekennzeichnet, dass** das erste Element (22) über mindestens einen Teil seiner Länge mindestens ein komplementäres Innendoppelrohr (36) umfasst, das das Element teilweise verstärken soll.

2. Aufbaustruktur nach dem vorhergehenden Anspruch, **dadurch gekennzeichnet, dass** das erste Element starr an dem Vorderteil befestigt ist und dass jedes komplementäre Innenrohr (36) an dem hinteren Ende (32) des ersten Elements (22), das es verdoppelt, derart angeordnet ist, dass es das Element im Fall eines Kontakt mit einem von dem starren Hinterteil (11) getragenen zweiten Element (34) verstärkt.

3. Aufbaustruktur nach einem der vorhergehenden Ansprüche, **dadurch gekennzeichnet, dass** das komplementäre Innendoppelrohr (36) in das Innere des ersten Elements (22) hineingedrückt ist.

4. Aufbaustruktur nach dem vorhergehenden Anspruch, **dadurch gekennzeichnet, dass** die Innenwände (38) des ersten rohrförmigen Elements (22) vorspringende Rippen (40) umfassen, die dazu bestimmt sind, das Halten des zugeordneten komplementären Innenrohrs (36) zu sichern.

5. Aufbaustruktur nach einem der vorhergehenden Ansprüche, **dadurch gekennzeichnet, dass** das komplementäre Innendoppelrohr (36) hohl ist und innen mindestens einen Verstärkungsquerträger (42) umfasst, der sich zwischen den Innenwänden des komplementären Rohrs (36) quer erstreckt.

6. Aufbaustruktur nach dem vorhergehenden Anspruch, **dadurch gekennzeichnet, dass** der Querträger (42) eine Aussparung (44) umfasst, die gegenüber von zu dem ersten Element (22) und dem komplementären Rohr (36) koaxial angeordneten Bohrlöchern (25, 27) angeordnet ist und dazu bestimmt ist, den Durchgang einer Befestigungsschraube (23) der Querachse (B), die die Bohrlöcher (25, 27) durchquert, zu ermöglichen, um die Befestigung eines dritten Elements (30) auf dem ersten Element (22) zu ermöglichen.

7. Aufbaustruktur nach dem vorhergehenden Anspruch, **dadurch gekennzeichnet, dass** die Aussparung (44) aus einer Gewindebohrung zur Aufnahme der Schraube (23) besteht.

8. Aufbaustruktur nach einem der vorhergehenden Ansprüche, **dadurch gekennzeichnet, dass** das erste Element (22) und das komplementäre Innendoppelrohr (36) in der Form profilierter Teilstücke aus Aluminium ausgeführt sind.

9. Aufbaustruktur für ein Kraftfahrzeug nach einem der vorhergehenden Ansprüche, **dadurch gekennzeichnet, dass** der Vorderteil (10) in einer ersten oberen Horizontalebene (P₁) mindestens zwei obere Längsträger (14), die sich von dem Hinterteil (11) nach vorne erstrecken, und in einer zweiten unteren Horizontalebene (P₂) zwei untere Längsträger umfasst, die die ersten Elemente (22) bilden und sich teilweise unterhalb der oberen Längsträger (14) erstrecken, deren Vorderenden (24) starr an Aufhängungsschenkeln (26) befestigt sind, welche an den Vorderenden (16) der oberen Längsträger befestigt sind, und deren Mittelteile (28) jeweils über mindestens einen das dritte Element bildenden Bolzen (30) mit einem zugeordneten Längsträger (14) verbunden sind, und deren Hinterteile (32) mit Spiel bezüglich der Aufnahmeelemente (34), die von dem Hinterteil getragen werden und das zweite Element bilden, angeordnet sind, um im Fall eines Längsaufpralls die Deformationswirkung der oberen Längsträger (14) abzulenken.
